# EUROPÄISCHE PATENTSCHRIFT

(11) **EP 3 809 322 B1**
(45) Veröffentlichungstag und Bekanntmachung des Hinweises auf die Patenterteilung: **15.04.2026**
(21) Anmeldenummer: 20201443.7
(22) Anmeldetag: 13.10.2020
(51) Int. Cl.: G06V 20/56, G06V 20/58

(54) **VORRICHTUNG ZUR VERMEIDUNG EINER KOLLISION EINER FAHRZEUGTÜR EINES KRAFTFAHRZEUGS MIT EINEM FAHRZEUGRAD**
DEVICE FOR PREVENTING THE COLLISION OF A VEHICLE DOOR OF A MOTOR VEHICLE WITH A VEHICLE WHEEL
DISPOSITIF PERMETTANT D'ÉVITER UNE COLLISION D'UNE PORTE D'UN VÉHICULE AUTOMOBILE AVEC UNE ROUE DE VÉHICULE

(30) Priorität: 19.10.2019 DE 102019007285
(43) Veröffentlichungstag der Anmeldung: 21.04.2021
(73) Patentinhaber: MAN Truck & Bus SE, 80995 München (DE)
(72) Erfinder: Gerritzen, Ralph, 80995 München (DE)
(74) Vertreter: v. Bezold & Partner Patentanwälte - PartG mbB

(56) Entgegenhaltungen:
- CN-A- 109 927 649
- DE-A1- 102015 206 453
- DE-A1- 102018 008 340
- DE-B3- 10 304 707
- US-A1- 2019 322 215
- CARVALHO L E ET AL: "3D object recognition and classification: a systematic literature review", PATTERN ANALYSIS AND APPLICATIONS, SPRINGER, NEW YORK, NY, US, vol. 22, no. 4, 27 February 2019 (2019-02-27), pages 1243 - 1292, XP036890652, ISSN: 1433-7541, [retrieved on 20190227], DOI: 10.1007/S10044-019-00804-4
- SORIN GRIGORESCU ET AL: "A Survey of Deep Learning Techniques for Autonomous Driving", ARXIV.ORG, CORNELL UNIVERSITY LIBRARY, 201 OLIN LIBRARY CORNELL UNIVERSITY ITHACA, NY 14853, 17 October 2019 (2019-10-17), XP081516856

## Beschreibung

Die Erfindung betrifft eine Vorrichtung zur Vermeidung einer Kollision einer Fahrzeugtür eines Kraftfahrzeugs mit einem lenkbaren Fahrzeugrad des Kraftfahrzeugs sowie ein Kraftfahrzeug, vorzugsweise einen Omnibus, umfassend eine solche Vorrichtung zur Vermeidung einer Kollision der Fahrzeugtür mit dem lenkbaren Fahrzeugrad.

Aus der Praxis, insbesondere bei Omnibussen, ist es bekannt, nach außen verschwenkbare Fahrzeugtüren einzusetzen.

Während der nach außen gerichteten Öffnungsbewegung der Fahrzeugtüren besteht die Gefahr einer Kollision mit Objekten, die sich im Schwenkbereich der Fahrzeugtüren befinden. Sind die Fahrzeugtüren im Bereich eines lenkbaren Fahrzeugrads angeordnet, wie es insbesondere bei Omnibussen z. B. im Bereich der gelenkten Vorderachse der Fall ist, besteht beim Öffnungsvorgang der Fahrzeugtür bei eingeschlagener Vorderachse die Gefahr einer Kollision mit dem lenkbaren Fahrzeugrad.

Zur Vermeidung von Kollisionen zwischen nach außen verschwenkbaren Fahrzeugtüren und einem lenkbaren Vorderrad beschreibt das Dokument DE 103 04 707 B3 den Lenkwinkel des lenkbaren Vorderrads mittels eines Sensors zu erfassen und die Lenkstellung des Vorderrads mittels einer Steuerung in Abhängigkeit des erfassten Lenkwinkels automatisch derart zu verändern, dass beim Öffnen der Fahrzeugtüre bzw. Außenschwingtüre diese nicht mit dem ausgelenkten Vorderrad in Berührung kommt.

Nachteile dieser Lösung sind insbesondere in der Notwendigkeit des Sensors als eigenständiges Bauteil und dem damit verbundenen erhöhten konstruktiven Aufwand sowie erhöhten Kosten zu sehen.

Es ist daher Aufgabe der Erfindung, eine zuverlässige Technik zur Vermeidung einer Kollision einer nach außen verschwenkbaren Fahrzeugtür eines Kraftfahrzeugs bereitzustellen, mit der Nachteile bekannter Techniken vermieden werden können.

Diese Aufgaben werden durch eine Vorrichtung mit den Merkmalen des unabhängigen Anspruchs gelöst. Vorteilhafte Ausführungsformen und Anwendungen der Erfindung sind Gegenstand der abhängigen Ansprüche und werden in der folgenden Beschreibung unter teilweise Bezugnahme auf die Figuren näher erläutert.

Gemäß einem allgemeinen Gesichtspunkt der Erfindung wird eine Vorrichtung zur Vermeidung einer Kollision einer Fahrzeugtür eines Kraftfahrzeugs, vorzugsweise eines Omnibusses, mit einem lenkbaren Fahrzeugrad des Kraftfahrzeugs bereitgestellt.

Die Vorrichtung umfasst eine Erfassungseinrichtung, die ausgebildet ist, eine Lenkstellung des Fahrzeugrads mittelbar oder unmittelbar zu erfassen. Ferner umfasst die Vorrichtung eine Steuereinrichtung, die ausgebildet ist, in Abhängigkeit von der erfassten Lenkstellung zu bestimmen, ob bei einem Öffnungsvorgang der Fahrzeugtür eine Gefahr einer Kollision der Fahrzeugtür mit dem Fahrzeugrad vorliegt. Der Öffnungsvorgang der Fahrzeugtür kann dabei beispielsweise eine Schwenkbewegung über eine im Wesentlichen vertikale Achse nach außen des Fahrzeugs in eine Öffnungsstellung beschreiben. Die Steuereinrichtung kann als eigenständiges physisches Bauteil, aber auch als Teil bestehender physischer Systeme, wie z. B. einem Bordcomputer oder als programmtechnischer Teil bestehender Softwaresysteme, wie z. B. einem Abbiegeassistenten, ausgebildet sein. Die Bestimmung der Kollisionsgefahr kann dabei beispielsweise dadurch erfolgen, dass die Steuereinrichtung prüft, ob das Fahrzeugrad in seiner erfassten Lenkstellung in einen vorbekannten Bewegungskorridor des Öffnungsvorgangs der Fahrzeugtür ragt.

Bei Vorliegen der Kollisionsgefahr ist die Steuereinrichtung ferner ausgebildet, zumindest eine Kollisionsvermeidungsmaßnahme zur Vermeidung der Kollision der Fahrzeugtür mit dem Fahrzeugrad, beispielsweise durch Ansteuerung entsprechend geeigneter Komponenten, einzuleiten. Alternativ oder ergänzend ist die Steuereinrichtung ausgebildet, bei Vorliegen der Kollisionsgefahr zumindest eine Kollisionsvermeidungsmaßnahme zur Vermeidung der Kollision der Fahrzeugtür mit dem Fahrzeugrad durchzuführen. Denkbare Kollisionsvermeidungsmaßnahmen sind alle Maßnahmen, die sich zur Vermeidung der Kollision eignen, von denen einige im weiteren Verlauf dieser Anmeldung definiert werden.

Erfindungsgemäß umfasst die Erfassungseinrichtung zumindest eine Kamera zur Erfassung der Lenkstellung. Die Kamera kann zur Erfassung der Lenkstellung Bilddaten erzeugen, in denen Informationen über die Lenkstellung des Fahrzeugrades enthalten sind. Hierzu kann die zumindest eine Kamera zumindest Bilddaten erzeugen, die einen Teilbereich des Fahrzeugrades umfassen und/oder abbilden. Die Steuereinrichtung kann ausgebildet sein, aus den Bilddaten der zumindest einen Kamera die Lenkstellung zu extrahieren. Ferner kann die Steuereinrichtung ausgebildet sein, festzustellen, ob die Lenkstellung, beispielsweise die aus den Bilddaten extrahierte Lenkstellung, in einem vorbestimmten Bereich von Lenkstellungen liegt, in dem beim Öffnungsvorgang der Fahrzeugtür eine Kollision der Fahrzeugtür mit dem Fahrzeugrad erfolgen würde, und falls dies der Fall ist, festzustellen, dass die Kollisionsgefahr vorliegt.

Die Lenkstellung wird somit durch die Kamera zumindest mittelbar über die erfassten Bilddaten erfasst. Anstelle der Steuereinrichtung kann alternativ auch die Kamera ausgebildet sein, die von ihr erfassten Bilddaten selbst auszuwerten und die Lenkstellung hieraus zu extrahieren und an die Steuereinrichtung zu übermitteln.

Die erfindungsgemäße Lösung ermöglicht es in vorteilhafter Weise auf eine vorzugsweise ohnehin am Kraftfahrzeug vorhandene Erfassungseinrichtung in Form von mindestens einer Kamera zurückzugreifen, um die Lenkstellung des Fahrzeugrads zu erfassen, anhand derer von der Steuereinrichtung die Gefahr einer Kollision der Fahrzeugtür mit dem Fahrzeugrad ermittelt wird.

Die zumindest eine Kamera ist eine Kamera eines Spiegelersatzsystems des Kraftfahrzeugs. Optional ist die zumindest eine Kamera eine Kamera eines Abbiegeassistenzsystems und/oder eine in einem Außenspiegel des Kraftfahrzeugs integrierte Kamera. Hierbei handelt es sich jeweils um eine Kamera, mittels derer ein Umfeldnahbereich des Kraftfahrzeugs erfassbar ist, der das lenkbare Fahrzeugrad zumindest teilweise enthält. Derartige Kameras kommen aktuell und zukünftig vermehrt zum Einsatz. In diesem Fall erfordert der erfindungsgemäße Ansatz, eine Kamera zu verwenden, um die Lenkstellung des Fahrzeugrades zu ermitteln, keine Mehrkosten für die Bereitstellung der Erfassungseinrichtung, da die Kamera ohnehin für andere Zwecke bereits am Kraftfahrzeug verbaut ist und diese so in einer Doppeltfunktion genutzt werden kann. Ein weiterer besonderer Vorzug ist, dass mittels der Kamera nicht nur die Lenkstellung, sondern auch andere Hindernisse im Öffnungsbereich der Fahrzeugtür erkannt werden können, was nachfolgend noch erläutert ist.

Die Kamera kann als z. B. als Digitalkamera mit CCD- oder CMOS-Technologie ausgestaltet sein. Gemäß einer möglichen Ausführungsform kann die Steuereinrichtung ausgebildet sein, den Bewegungskorridor des Öffnungsvorgangs der Fahrzeugtür erst aus erfassten Bilddaten der Kamera zu errechnen. Bevorzugt ist jedoch, den Bewegungskorridor vorab zu bestimmen und in der Steuereinrichtung zu hinterlegen.

Gemäß einem weiteren Aspekt der Erfindung kann die Steuereinrichtung ausgebildet sein, nur bei stehendem Fahrzeug zu bestimmen, ob die Gefahr einer Kollision der Fahrzeugtür mit dem Fahrzeugrad vorliegt. Dadurch kann die Kollisionsüberwachung auf Betriebssituationen begrenzt werden, in denen ein Türöffnungsvorgang wahrscheinlich und/oder möglich ist.

Vorstehend wurde bereits festgestellt, dass die mindestens eine Kamera zur Erfassung der Lenkstellung Bilddaten erzeugt, in denen Informationen über die Lenkstellung des Fahrzeugrades enthalten sind. Beispielsweise kann die Lenkstellung anhand des seitlich aus dem Radkasten herausragenden Teils des Fahrzeugrades erfasst werden. Anhand der von der Kamera erfassten Bilddaten kann bestimmt werden, ob das Fahrzeugrad aus dem Radkasten herausragt, und falls ja, wie weit und/oder in welchem Winkel das Fahrzeugrad zur Längsachse des Fahrzeugs steht und ob entsprechend ein Kollisionsrisiko mit der Fahrzeugtür bei deren Öffnungsvorgang besteht. Erfasst die Kamera keinen Radbereich, kann beispielsweise davon ausgegangen werden, dass das Fahrzeugrad nicht eingeschlagen wurde und somit kein Kollisionsrisiko besteht.

Der Begriff der Lenkstellung, wie er im Sinne der vorliegenden Erfindung verstanden wird, schließt jedoch andere Ansätze und Auswertemethoden nicht aus, um anhand der Bilddaten der Kamera die Lenkstellung des Fahrzeugrades zu bestimmen. Denkbar ist hier beispielsweise die Verwendung von einem oder mehreren Markierungsobjekten, z. B. eines auf dem Fahrzeugrad und eines am Radkasten, deren Position von der Kamera erfasst wird, um hieraus die Lenkstellung zu erfassen.

Gemäß einem weiteren Aspekt der Erfindung kann die Steuereinrichtung ausgebildet sein, anhand von der Kamera erzeugten Bilddaten zu bestimmen, ob sich in einem Öffnungsbereich der Fahrzeugtür außer dem Fahrzeugrad weitere Hindernisse, beispielsweise Gegenstände oder Personen, befinden. Falls dies der Fall ist, kann die Steuereinrichtung ausgebildet sein, festzustellen, dass die Kollisionsgefahr vorliegt. Dieser Aspekt der Erfindung ermöglicht es, die erfindungsgemäße Vorrichtung zusätzlich auch zur Vermeidung von Kollisionen der Fahrzeugtür mit fahrzeugfremden Objekten zu nutzen, sodass nicht nur das Risiko einer Türkollision mit dem Fahrzeugrad, sondern auch mit anderen im Türöffnungsbereich befindlichen Hindernissen vermieden werden kann.

Vorstehend wurde bereits festgestellt, dass bei Vorliegen der Kollisionsgefahr eine oder mehrere Kollisionsvermeidungsmaßnahmen von der Steuereinrichtung eingeleitet und/oder durchgeführt werden können. Nachfolgend werden vorteilhafte Ausführungsvarianten und Beispiele derartiger Kollisionsvermeidungsmaßnahmen aufgeführt und beschrieben.

Gemäß einem weiteren Aspekt der Erfindung kann die zumindest eine Kollisionsvermeidungsmaßnahme umfassen, eine Öffnung der Fahrzeugtür zu blockieren bis die Kollisionsgefahr nicht mehr vorliegt. Z. B. kann die Steuereinrichtung hierzu die zur Öffnung der Fahrzeugtür notwendigen Komponenten nicht ansteuern oder die zur Blockierung der Fahrzeugtür geeigneten Komponenten, z. B. die Zentralverriegelung des Kraftfahrzeugs, ansteuern. Bei einem Omnibus kann beispielsweise das Öffnen der Fahrzeugtür zumindest zeitweise blockiert werden, so dass der Fahrer diese nicht öffnen kann oder zumindest nur durch explizites Übergehen der Blockierung die Fahrzeugtür öffnen kann und somit auch bei Kenntnisnahme der Kollisionsgefahr die Fahrzeugtür öffnen kann, z. B. in Notfällen.

Vorteilhaft ergibt sich, dass Kollisionen zwischen der Fahrzeugtür und dem Fahrzeugrad ausgeschlossen werden. Passagiere können zudem in vorteilhafter Weise am Verlassen oder Betreten des Fahrzeugs gehindert werden, bis keine Kollisionsgefahr mehr vorliegt, was letztlich der Erhöhung der Sicherheit der Passagiere zuträglich ist.

Gemäß einem weiteren Aspekt der Erfindung kann die zumindest eine Kollisionsvermeidungsmaßnahme umfassen, lediglich eine Teilöffnung der Fahrzeugtür zu ermöglichen, wobei in der teilgeöffneten Stellung der Fahrzeugtür keine Kollision der Fahrzeugtür mit dem Fahrzeugrad möglich ist. Vorteile dieses Aspekts sind insbesondere darin zu sehen, dass Passagiere das Kraftfahrzeug - zumindest in eingeschränktem Maße - noch verlassen oder betreten können und gleichzeitig eine Kollision der Fahrzeugtür mit dem Fahrzeugrad vermieden wird - obwohl die Kollisionsgefahr vorliegt.

Gemäß einer weiteren Ausgestaltungsform der Erfindung kann die Steuereinrichtung ausgebildet sein, zu überwachen, ob nach Bestimmung des Vorliegens einer Kollisionsgefahr ein Fahrer des Kraftfahrzeugs das lenkbare Fahrzeugrad über eine manuelle Änderung einer Lenkradstellung in eine Lenkstellung verbringt, für die keine Kollisionsgefahr vorliegt. Falls dies der Fall ist, kann die Steuereinrichtung ferner ausgebildet sein, die mindestens eine Kollisionsvermeidungsmaßnahme zu beenden. Vorteilhaft kann die Vorrichtung besonders schnell erfassen, ob die Kollisionsgefahr noch vorliegt oder nicht.

Gemäß einem weiteren Aspekt der Erfindung kann die zumindest eine Kollisionsvermeidungsmaßnahme umfassen, das lenkbare Fahrzeugrad mittels eines Aktuators automatisch in eine Lenkstellung zu verbringen, für die keine Kollisionsgefahr vorliegt. Denkbar ist in diesem Zusammenhang ein automatisches Verbringen des lenkbaren Fahrzeugrads mittels eines jeden Aktuators, der geeignet ist, die Lenkstellung des Fahrzeugrads mittelbar oder unmittelbar zu verändern. Vorteilhaft bedarf es zur Beseitigung der Kollisionsgefahr durch die Kollisionsvermeidungsmaßnahme nicht der Aufmerksamkeit des Fahrers des Kraftfahrzeugs, was Vorteile in Bezug auf die Verkehrssicherheit birgt.

Gemäß einer weiteren Ausgestaltungsform der Erfindung kann die zumindest eine Kollisionsvermeidungsmaßnahme umfassen, zumindest einen Warnhinweis, vorzugsweise eine visuelle Warnmeldung und/oder ein akustisches Warnsignal, auszugeben. Es ist denkbar, dass die Steuereinrichtung den zumindest einen Warnhinweis hierzu z. B. über geeignete Warnleuchten im Innenraum des Kraftfahrzeugs, ein Display, Lautsprecher, etc. ausgibt. Der zumindest eine Warnhinweis kann z. B. durch einen Fahrerhinweis auf Sperrung der Türfreigabe mit einem Handlungshinweis, beispielsweise durch den visuellen oder akustischen Hinweis "Lenkrad betätigen und VA möglichst in Geradeausstellung bringen", erfolgen. Der Fahrer des Kraftfahrzeugs wird in dieser Ausgestaltungsform der Erfindung über das Vorliegen der Kollisionsgefahr informiert, so dass dieser entsprechend Abhilfemaßnahmen ergreifen kann.

Gemäß einem weiteren Aspekt der Erfindung kann die Steuereinrichtung ausgebildet sein, eine Lenkwinkelinformation, vorzugsweise eine über einen Datenbus des Kraftfahrzeugs übermittelte Lenkwinkelinformation, eines elektronischen Bremssystems (EBS) und/oder eines elektronischen Stabilitätsprogramms (ESP) zu empfangen. Aus der Lenkwinkelinformation kann die Lenkstellung bzw. die Radstellung des Fahrzeugrades bestimmt werden. In Abhängigkeit von der empfangenen Lenkwinkelinformation kann die Steuereinrichtung ferner ausgebildet sein, zu bestimmen, ob die Gefahr der Kollision der Fahrzeugtür vorliegt. Der Datenbus kann z. B. ein CAN-Bus des Kraftfahrzeugs sein. Die durch die Kamera erfasste Lenkstellung des Fahrzeugrads können auf dieses Weise vorteilhaft einer Plausibilitätsprüfung unterzogen und/oder korrigiert werden. Die Erfassung der Lenkstellung des Fahrzeugrads erfolgt so auf noch zuverlässigere Weise.

Die Erfindung betrifft ferner ein Kraftfahrzeug, vorzugsweise Omnibus, umfassend zumindest eine Fahrzeugtür, zumindest ein lenkbares Fahrzeugrad und eine Vorrichtung gemäß einem der vorhergehenden Aspekte und Ausgestaltungsformen.

Gemäß einer Ausgestaltungsform des Kraftfahrzeugs kann die Fahrzeugtür zwei Türflügel umfassen. Ferner kann die Steuereinrichtung ausgebildet sein, bei Vorliegen der Kollisionsgefahr die zumindest eine Kollisionsvermeidungsmaßnahme nur für denjenigen Türflügel einzuleiten und/oder durchzuführen, für den die Kollisionsgefahr besteht. Ein Verlassen und Betreten von Passagieren des Kraftfahrzeugs ist in dieser Ausgestaltungsform des Kraftfahrzeugs insofern auf vorteilhafte Weise durch denjenigen Türflügel weiterhin möglich, für den keine Kollisionsgefahr besteht. In der Regel besteht nur für einen der beiden Türflügel ein Kollisionsrisiko, nämlich für denjenigen Türflügel, der benachbart zum Fahrzeugrad ist, d. h. sich zu diesem Fahrzeugrad hin öffnet.

Gemäß einem weiteren Aspekt des Kraftfahrzeugs kann das lenkbare Fahrzeugrad Teil einer lenkbaren Starrachse des Kraftfahrzeugs sein. Alternativ oder ergänzend hierzu kann das Kraftfahrzeug ein Lenkgestänge zur Übertragung von Lenkkräften, ein vorzugsweise hydraulisch unterstütztes Lenkgetriebe und einen an das Lenkgestänge angeflanschten Elektromotor zur Lenkkraftunterstützung umfassen. Gemäß dieser Ausführungsform kann der an das Lenkgestänge angeflanschte Elektromotor gemäß einer weiteren Variante genutzt werden, bei Vorliegen einer Kollisionsgefahr die Lenkstellung automatisch zu korrigieren, in dem eine Lenckraft aufgebracht wird, um das Fahrzeugrad in eine Stellung zu bringen, in der keine Kollisionsgefahr droht.

Eine hervorgehobene Anwendung der Erfindung betrifft Omnibusse. Entsprechend kann in einer weiteren Ausgestaltungsform das Kraftfahrzeug ein Omnibus sein, bei dem die Fahrzeugtür, deren Kollisionsrisiko überwacht wird, zwei Türflügel umfasst und wobei die Kamera des Omnibusses zur Erfassung der Lenkstellung des Fahrzeugrades eine Kamera eines Spiegelersatzsystems des Kraftfahrzeugs (und optional eine Kamera eines Abbiegeassistenzsystems, und/oder eine in einem Außenspiegel des Kraftfahrzeugs integrierte Kamera) ist, mittels derer ein Umfeldnahbereich des Kraftfahrzeugs erfassbar ist, der das lenkbare Fahrzeugrad zumindest teilweise enthält.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigen:
- Figur 1: ein Blockdiagram zur schematischen Darstellung der Funktionsweise einer Vorrichtung gemäß einer Ausführungsform der Erfindung;
- Figur 2: eine Seitenansicht eines Teils eines Omnibusses, umfassend eine Vorrichtung gemäß einer weiteren Ausführungsform der Erfindung;
- Figur 3: eine stark schematisierte Schnittansicht (Draufsicht) eines Teils des Omnibusses aus Figur 2, mit einseitig geöffneten Türflügeln bei Vorliegen einer Kollisionsgefahr; und
- Figur 4: eine stark schematisierte Schnittansicht (Draufsicht) eines Teils des Omnibusses aus Figur 2 mit beidseitig geöffneten Türflügeln nach Durchführung einer Kollisionsvermeidungsmaßnahme.

Gleiche oder funktional äquivalente Elemente sind in allen Figuren mit denselben Bezugszeihen bezeichnet und sind zum Teil nicht gesondert beschrieben.

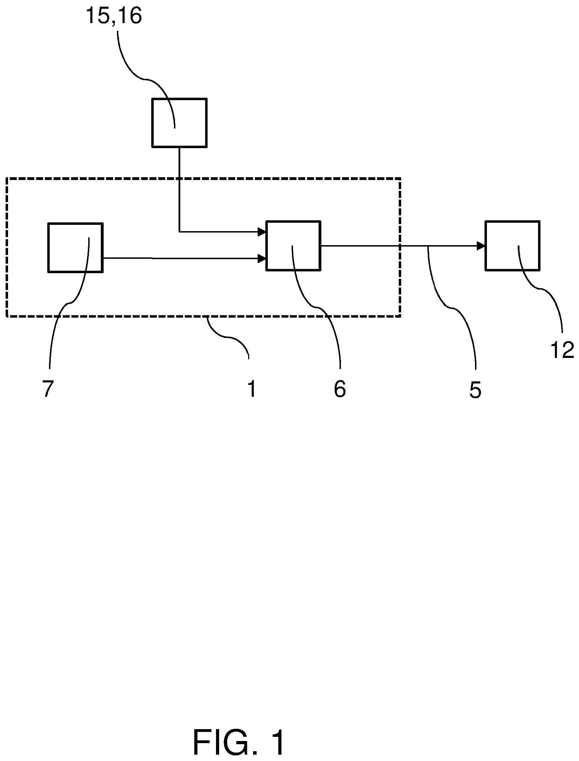

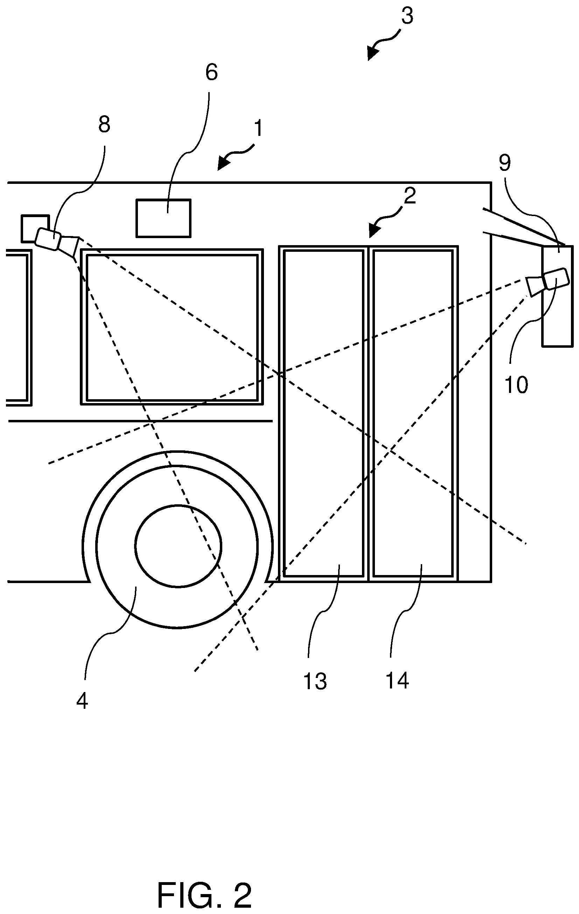

Figur 1 zeigt ein Blockdiagram zur schematischen Darstellung einer bevorzugten Ausführungsform einer Vorrichtung zur Vermeidung einer Kollision einer Fahrzeugtür eines Kraftfahrzeugs mit einem lenkbaren Fahrzeugrad des Kraftfahrzeugs. Die Vorrichtung 1 umfasst in dieser Ausgestaltungsform eine Erfassungseinrichtung und eine Steuereinrichtung 6. Die Steuereinrichtung 6 ist im gezeigten Ausführungsbeispiel als eigenständiges physisches Bauteil ausgebildet, kann aber auch als Teil bestehender physischer Systeme, wie z. B. einem Bordcomputer oder als programmtechnischer Teil bestehender Softwaresysteme, wie z. B. einem Abbiegeassistenten, ausgebildet sein. Die Erfassungseinrichtung umfasst ihrerseits eine Kamera 7. Die Kamera 7 erfasst die Lenkstellung in dem die Kamera 7 Bilddaten eines, in Figur 2, Figur 3 oder Fig. 4 dargestellten Umfeldnahbereichs des Kraftfahrzeugs erzeugt, in denen auch die Lenkstellung eines Fahrzeugrads 4 enthalten ist und übermittelt diese an die Steuereinrichtung 6.

Die Steuereinrichtung 6 extrahiert, z. B. mittels Bildverarbeitungsalgorithmen, aus der durch die Kamera 7 erzeugten Bilddaten die Lenkstellung des Fahrzeugrads 4 und stellt fest, ob bei einem Öffnungsvorgang der Fahrzeugtür 2 eine Gefahr einer Kollision der Fahrzeugtür 2 mit dem Fahrzeugrad 4 vorliegt.

Die Steuereinrichtung 6 kann optional zusätzlich Lenkwinkelinformationen von einem elektronischen Bremssystem (EBS) 15 und/oder von einem elektronischen Stabilitätsprogramm (ESP) 16 empfangen. In diesem Fall kann die Steuereinrichtung 6 die von dem EBS 15 und/oder ESP 16 empfangenen Lenkwinkelinformationen zum gegenseitigen Abgleich im Sinne einer Plausibilitätsprüfung verwenden.

In der Steuereinrichtung 6 ist ein vorbestimmter Bereich der Lenkstellung hinterlegt, innerhalb dessen beim Öffnungsvorgang der Fahrzeugtür 2 eine Kollision der Fahrzeugtür 2 mit dem Fahrzeugrad 4 erfolgen würde. Die Steuereinrichtung 6 stellt fest, ob die erfasste Lenkstellung des Fahrzeugrads 4 innerhalb des vorbestimmten Bereichs liegt und somit eine Kollisionsgefahr vorliegt.

Falls die Steuereinrichtung 6 feststellt, dass eine Kollisionsgefahr vorliegt, leitet die Steuereinrichtung 6 zumindest eine Kollisionsvermeidungsmaßnahme 12 ein, die hier beispielhaft darin besteht, einen (nicht dargestellten) Aktuator anzusteuern, der das lenkbare Fahrzeugrad 4 automatisch in eine Lenkstellung verbringt, für die keine Kollisionsgefahr vorliegt. Die Kollisionsvermeidungsmaßnahme 12 wird von der Steuereinrichtung 6 durch Ausgabe entsprechender Steuersignale 5 eingeleitet, hier z. B. Steuersignale zur Ansteuerung des Aktors zur Veränderung der Lenkstellung des Fahrzeugrades. Die Kollisionsvermeidungsmaßnahme 12 kann optional zusätzlich z. B. auch darin bestehen, Steuersignale an zumindest ein im Omnibus befindliches Display oder Lautsprecher zu senden, die die Ausgabe entsprechender visueller oder akustischer Warnhinweise auf dem Display bzw. durch die Lautsprecher zur Folge haben.

Figur 2 zeigt eine Seitenansicht eines vorderen Teils eines Kraftfahrzeugs 3, das hier als Omnibus ausgeführt ist. Der Omnibus umfasst eine Vorrichtung 1 zur Vermeidung einer Kollision einer Fahrzeugtür 2 des Omnibusses 3 mit einem lenkbaren Fahrzeugrad 4 gemäß einer weiteren Ausführungsform der Erfindung.

Der Omnibus befindet sich im Stillstand. Die vordere Fahrzeugtür ist geschlossen.

Die Fahrzeugtür 2 ist zweiflügelig ausgeführt und umfasst einen ersten Türflügel 13 und einen zweiten Türflügel 14, die in voneinander unabhängigen Öffnungsvorgängen geöffnet werden können.

Das Kraftfahrzeug 3 umfasst im gezeigten Ausführungsbeispiel ferner ein Abbiegeassistenzsystem (nicht dargestellt) mit einer Kamera 8 sowie eine in einem Außenspiegel 9 integrierte Kamera 10. Die Kamera 8 ist in Fahrtrichtung ausgerichtet und erfasst einen Umfeldnahbereich des Kraftfahrzeugs 3, der teilweise auch das lenkbare Fahrzeugrad 4 enthält. Die Kamera 10 ist entgegen der Fahrtrichtung ausgerichtet und umfasst ebenfalls einen Umfeldnahbereich des Kraftfahrzeugs 3, der teilweise auch das lenkbare Fahrzeugrad 4 enthält. In anderen Worten befindet sich das Fahrzeugrad 4 also zumindest teilweise in den Sichtkegeln der Kameras 8, 10. Alternativ kann auch nur eine der Kameras 8 oder 10 vorgesehen sein. Anstatt einer in den Außenspiegel 9 integrierten Kamera kann ferner alternativ eine Spiegelersatzkamera verwendet werden, wenn anstelle des Außenspiegels 9 dieser als Spiegelersatzkamera ausgeführt ist.

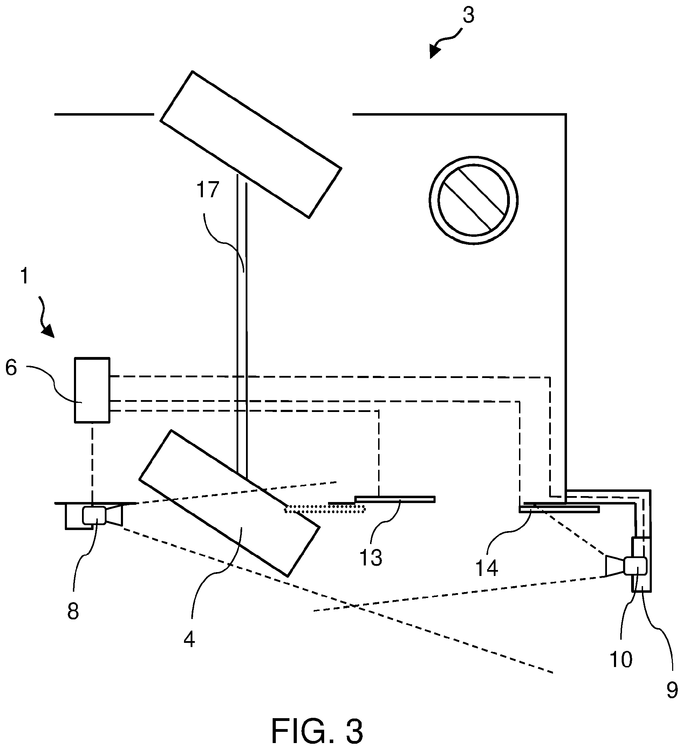

Figur 3 zeigt das in Figur 2 gezeigte Ausführungsbeispiel in der Schnittansicht (Draufsicht).

Das lenkbare Fahrzeugrad 4 ist über die lenkbare Starrachse 17 in eine Lenkstellung verbracht, die in einem Bereich liegt, in dem beim Öffnungsvorgang des ersten Türflügels 13 eine Kollision des Türflügels 13 mit dem Fahrzeugrad 4 erfolgen würde (angedeutet durch die punktierten Linien in Figur 3).

Die Kameras 8, 10 erzeugen Bilddaten, die den aus dem Radkasten herausragenden Teil des Fahrzeugrades 4 enthalten. Die Bilddaten enthalten somit die Lenkstellung des Fahrzeugrads 4. Diese Bilddaten und damit die darin enthaltene Lenkstellung des Fahrzeugrades werden von den Kameras 8, 10 z. B. über in Figur 3 durch strichlierte Linien angedeuteten Datenverbindungen an die Steuereinrichtung 6 übermittelt. Die Steuereinrichtung 6 wertet diese Bilddaten im Hinblick auf die darin enthaltene Lenkradstellung aus. Hierzu ist die Steuereinrichtung programmtechnisch eingerichtet, mittels Bildverarbeitungsalgorithmen das Fahrzeugrad in den Bilddaten zu erkennen und dessen Ausrichtung und damit dessen Lenkstellung anhand der von der oder den Kameras 8, 10 erfassten Bilddaten zu bestimmen.

Im gezeigten Ausführungsbeispiel liegt die erfasste Lenkstellung des Fahrzeugrads 4 ferner in einem Bereich, in dem eine Gefahr einer Kollision mit dem ersten Türflügel 13 besteht.

Die in der Folge durch die Steuereinrichtung 6 eingeleitete Kollisionsvermeidungsmaßnahme 12 besteht darin, die Öffnung des ersten Türflügels 13 zu blockieren. In der Steuereinrichtung 6 ist ferner hinterlegt, dass eine Kollision des zweiten Türflügels 14 in keiner Lenkstellung des Fahrzeugrads 4 möglich ist. Es erfolgt aus diesem Grund unabhängig davon, ob eine Kollisionsgefahr für den ersten Türflügel 13 vorliegt, eine Öffnung des zweiten Türflügels 14. Der zweite Türflügel 14 kann so trotz der für den ersten Türflügel 13 vorliegenden Kollisionsgefahr zwischen dem ersten Türflügel 13 und dem Fahrzeugrad 4 von das Kraftfahrzeug 3 verlassenden und zusteigenden Passagieren genutzt werden. Die Steuereinrichtung 6 kann ferner weitere Kollisionsvermeidungsmaßnahmen, wie vorstehend beschriebenen, einleiten.

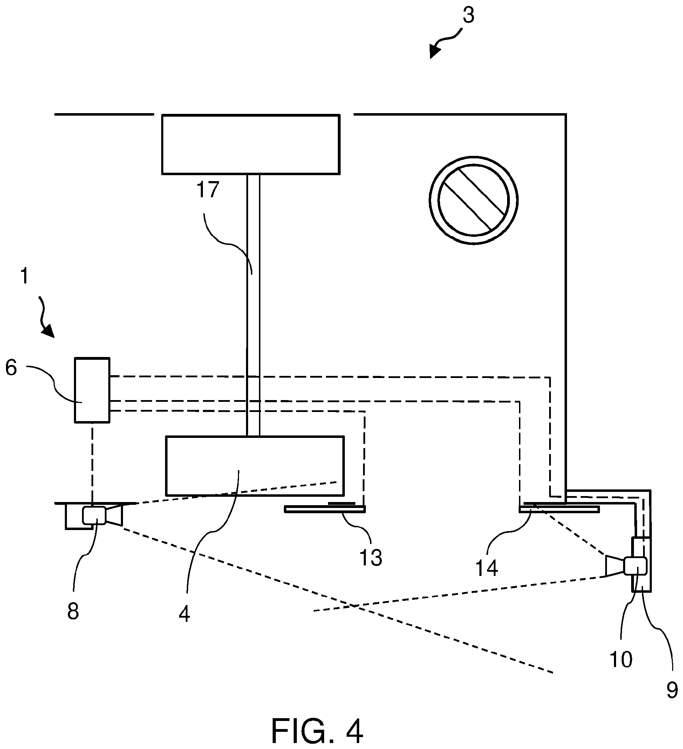

Figur 4 zeigt eine Weiterbildung des in Figur 2 und Figur 3 gezeigten Ausführungsbeispiels in der Schnittansicht (Draufsicht).

Aufbauend auf dem im Figur 3 gezeigten Ausführungsbeispiel wurde im Ausführungsbeispiel der Figur 4 nach Ermitteln der Kollisionsgefahr für den ersten Türflügel durch die Steuereinrichtung 6 eine zusätzliche Kollisionsvermeidungsmaßnahme 12 durchgeführt. In Figur 4 ist also, zeitlich gesehen, eine Situation nach der Durchführung der zusätzlichen Kollisionsvermeidungsmaßnahme dargestellt. Diese bestand im gezeigten Ausführungsbeispiel darin, dass das lenkbare Fahrzeugrad 4 mittels eines an ein Lenkgestänge (nicht dargestellt) angeflanschten Elektromotors (nicht dargestellt) in eine Lenkstellung verbracht wurde, für den keine Kollisionsgefahr vorliegt. Im gezeigten Ausführungsbeispiel ist diese Lenkstellung die Geradeausstellung des Fahrzeugrads 4.

Die Kameras 8, 10 erzeugen wiederrum Bilddaten, die auch die Lenkstellung des Fahrzeugrads 4 enthalten und übermitteln diese in bereits beschriebener Weise an die Steuereinrichtung 6. Die Steuereinrichtung 6 extrahiert die Lenkstellung des Fahrzeugrads 4 aus den Bilddaten und stellt im dargestellten Ausführungsbeispiel fest, dass die erfasste Lenkstellung des Fahrzeugrads 4 momentan in einem Bereich liegt, in dem keine Gefahr einer Kollision mit des ersten Türflügels 13 mit dem Fahrzeugrad 4 besteht.

Die Steuereinrichtung 6 gibt den ersten Türflügel 13 in der Folge für den Öffnungsvorgang frei und es erfolgt die Öffnung des ersten Türflügels 13. Im gezeigten Ausführungsbeispiel sind damit nach Durchführung der zusätzlichen Kollisionsvermeidungsmaßnahme 12 beide Türflügel 13, 14 geöffnet.

Obwohl die Erfindung unter Bezugnahme auf bestimmte Ausführungsbeispiele beschrieben worden ist, ist es für den Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Vorrichtung zur Vermeidung einer Kollision
- 2: Fahrzeugtür
- 3: Kraftfahrzeug
- 4: Fahrzeugrad
- 5: Steuersignale
- 6: Steuereinrichtung
- 7: Kamera
- 8: Kamera des Abbiegeassistenzsystems
- 9: Außenspiegel
- 10: im Außenspiegel (9) integrierte Kamera
- 11: Aktuator
- 12: Kollisionsvermeidungsmaßnahme
- 13: erster Türflügel
- 14: zweiter Türflügel
- 15: elektronisches Bremssystem (EBS-System)
- 16: elektronisches Stabilitätsprogramm (ESP)
- 17: lenkbare Starrachse

## Patentansprüche

1. Vorrichtung (1) zur Vermeidung einer Kollision einer Fahrzeugtür (2) eines Kraftfahrzeugs (3), vorzugsweise eines Omnibusses, mit einem lenkbaren Fahrzeugrad (4) des Kraftfahrzeugs (3), umfassend:
eine Erfassungseinrichtung, die ausgebildet ist, eine Lenkstellung des Fahrzeugrads (4) mittelbar oder unmittelbar zu erfassen,
eine Steuereinrichtung (6), die ausgebildet ist, in Abhängigkeit der erfassten Lenkstellung zu bestimmen, ob bei einem Öffnungsvorgang der Fahrzeugtür (2) eine Gefahr einer Kollision der Fahrzeugtür (2) mit dem Fahrzeugrad (4) vorliegt und bei Vorliegen der Kollisionsgefahr zumindest eine Kollisionsvermeidungsmaßnahme (12) zur Vermeidung der Kollision der Fahrzeugtür (2) mit dem Fahrzeugrad (4) einzuleiten und/oder durchzuführen,
**dadurch gekennzeichnet,**
**dass** die Erfassungseinrichtung zumindest eine Kamera (7, 8, 10) zur Erfassung der Lenkstellung umfasst, und
**dass** die zumindest eine Kamera (7, 8, 10) eine Kamera eines Spiegelersatzsystems des Kraftfahrzeugs (3) ist, mittels derer ein Umfeldnahbereich des Kraftfahrzeugs (3) erfassbar ist, der das lenkbare Fahrzeugrad (4) zumindest teilweise enthält.

2. Vorrichtung (1) nach Anspruch 1, **dadurch gekennzeichnet, dass** die zumindest eine Kamera (7, 8, 10) eine Kamera (8) eines Abbiegeassistenzsystems und/oder eine in einem Außenspiegel (9) des Kraftfahrzeugs integrierte Kamera (10) ist, mittels derer ein Umfeldnahbereich des Kraftfahrzeugs (3) erfassbar ist, der das lenkbare Fahrzeugrad (4) zumindest teilweise enthält.

3. Vorrichtung (1) nach einem der Ansprüche 1 oder 2, **dadurch gekennzeichnet,**
a) **dass** die zumindest eine Kamera ausgebildet ist, zur Erfassung der Lenkstellung Bilddaten zu erzeugen, die zumindest Bilddaten eines Teilbereichs des Fahrzeugrades (4) umfassen, und/oder
b) **dass** die Steuereinrichtung (6) ausgebildet ist, aus den Bilddaten der zumindest einen Kamera die Lenkstellung zu extrahieren, und festzustellen, ob die Lenkstellung in einem vorbestimmten Bereich von Lenkstellungen liegt, in dem beim Öffnungsvorgang der Fahrzeugtür (2) eine Kollision der Fahrzeugtür (2) mit dem Fahrzeugrad (4) erfolgen würde, und falls dies der Fall ist, festzustellen, dass die Kollisionsgefahr vorliegt.

4. Vorrichtung (1) nach einem der vorhergehenden Ansprüche, **dadurch gekennzeichnet, dass** die Steuereinrichtung (6) ausgebildet ist, anhand von der Kamera (7, 8, 10) erzeugten Bilddaten zu bestimmen, ob sich in einem Öffnungsbereich der Fahrzeugtür (2) Hindernisse, beispielsweise Gegenstände oder Personen, befinden und falls dies der Fall ist, festzustellen, dass die Kollisionsgefahr vorliegt.

5. Vorrichtung (1) nach einem der vorhergehenden Ansprüche, **dadurch gekennzeichnet, dass** die zumindest eine Kollisionsvermeidungsmaßnahme (12) umfasst, eine Öffnung der Fahrzeugtür (2) zu blockieren bis die Kollisionsgefahr nicht mehr vorliegt.

6. Vorrichtung (1) nach einem der Ansprüche 1 bis 4, **dadurch gekennzeichnet, dass** die zumindest eine Kollisionsvermeidungsmaßnahme (12) umfasst, lediglich eine Teilöffnung der Fahrzeugtür (2) zu ermöglichen, wobei in der teilgeöffneten Stellung der Fahrzeugtür (2) keine Kollision der Fahrzeugtür (2) mit dem Fahrzeugrad (4) möglich ist.

7. Vorrichtung (1) nach einem der vorhergehenden Ansprüche, **dadurch gekennzeichnet, dass** die Steuereinrichtung (6) ausgebildet ist, zu überwachen, ob nach Bestimmung des Vorliegens einer Kollisionsgefahr ein Fahrer des Kraftfahrzeugs (3) das lenkbare Fahrzeugrad (4) über eine manuelle Änderung einer Lenkradstellung in eine Lenkstellung verbringt, für die keine Kollisionsgefahr vorliegt und falls dies der Fall ist, die mindestens eine Kollisionsvermeidungsmaßnahme (12) zu beenden.

8. Vorrichtung (1) nach einem der vorhergehenden Ansprüche, **dadurch gekennzeichnet,** die zumindest eine Kollisionsvermeidungsmaßnahme (12) umfasst, das lenkbare Fahrzeugrad (4) mittels eines Aktuators (11) automatisch in eine Lenkstellung zu verbringen, für die keine Kollisionsgefahr vorliegt.

9. Vorrichtung (1) nach einem der vorhergehenden Ansprüche, **dadurch gekennzeichnet, dass** die zumindest eine Kollisionsvermeidungsmaßnahme (12) umfasst, zumindest einen Warnhinweis, vorzugsweise eine visuelle Warnmeldung und/oder ein akustisches Warnsignal, auszugeben.

10. Vorrichtung (1) nach einem der vorhergehenden Ansprüche, **dadurch gekennzeichnet, dass** die Steuereinrichtung (6) ausgebildet ist, eine Lenkwinkelinformation, vorzugsweise eine über einen Datenbus des Kraftfahrzeugs (3) übermittelte Lenkwinkelinformation, eines elektronischen Bremssystems, EBS, (15) und/oder eines elektronischen Stabilitätsprogramms, ESP, (16) zu empfangen, und in Abhängigkeit von der empfangenen Lenkwinkelinformation zu bestimmen, ob die Gefahr der Kollision der Fahrzeugtür (2) vorliegt.

11. Kraftfahrzeug (3), vorzugsweise Omnibus, umfassend zumindest eine Fahrzeugtür (2), zumindest ein lenkbares Fahrzeugrad (4) und eine Vorrichtung (1) gemäß einem der vorhergehenden Ansprüche.

12. Kraftfahrzeug (3) nach Anspruch 11, **dadurch gekennzeichnet, dass** die Fahrzeugtür (2) zwei Türflügel (13, 14) umfasst und dass die Steuereinrichtung (6) ausgebildet ist, bei Vorliegen der Kollisionsgefahr die zumindest eine Kollisionsvermeidungsmaßnahme (12) nur für denjenigen Türflügel (13, 14) einzuleiten und/oder durchzuführen, für den die Kollisionsgefahr besteht.

13. Kraftfahrzeug (3) nach einem der vorhergehenden Ansprüche 11 oder 12, **dadurch gekennzeichnet,**
a) **dass** das lenkbare Fahrzeugrad (4) Teil einer lenkbaren Starrachse (17) des Kraftfahrzeugs (3) ist; und/oder
b) **dass** das Kraftfahrzeug (3) ein Lenkgestänge zur Übertragung von Lenkkräften, ein vorzugsweise hydraulisch unterstütztes Lenkgetriebe und einen an das Lenkgestänge angeflanschten Elektromotor zur Lenkkraftunterstützung umfasst.

14. Kraftfahrzeug (3) nach einem der vorhergehenden Ansprüche 9 bis 13, **dadurch gekennzeichnet,**
a) **dass** das Kraftfahrzeug (3) ein Omnibus ist,
b) **dass** die Fahrzeugtür (4) zwei Türflügel (13, 14) umfasst; und
c) **dass** die zumindest eine Kamera (7, 8, 10) eine Kamera (8) eines Abbiegeassistenzsystems, eine Kamera eines Spiegelersatzsystems des Kraftfahrzeugs (3) oder eine in einem Außenspiegel (9) des Kraftfahrzeugs (3) integrierte Kamera (10) ist, mittels derer ein Umfeldnahbereich des Kraftfahrzeugs (3) erfassbar ist, der das lenkbare Fahrzeugrad (4) zumindest teilweise enthält.

## Claims

1. Device (1) for preventing a collision of a vehicle door (2) of a motor vehicle (3), preferably a bus, with a steerable vehicle wheel (4) of the motor vehicle (3), comprising
a detection device which is configured to detect a steering position of the vehicle wheel (4) indirectly or directly,
a control device (6) which is configured to determine, in dependence on the detected steering position, whether there is a risk of a collision between the vehicle door (2) and the vehicle wheel (4) during an opening operation of the vehicle door (2) and, if the collision risk is present, to initiate and/or to carry out at least one collision avoidance measure (12) to avoid the collision of the vehicle door (2) with the vehicle wheel (4) and/or
**characterized in**
**that** the detection device comprises at least one camera (7, 8, 10) for detecting the steering position, and
**that** the at least one camera (7, 8, 10) is a camera of a mirror replacement system of the motor vehicle (3), by means of which a near-surrounding area of the motor vehicle (3) is detectable, which at least partially includes the steerable vehicle wheel (4).

2. Device (1) according to claim 1, **characterized in that** the at least one camera (7, 8, 10) is a camera (8) of a turning assistance system and/or a camera (10) integrated in an exterior mirror (9) of the motor vehicle, by means of which a near-surrounding area of the motor vehicle (3) can be detected, which at least partially contains the steerable vehicle wheel (4).

3. Device (1) according to one of claims 1 or 2, **characterized in,**
a) **that** the at least one camera is configured to generate image data for detecting the steering position, which image data comprise at least image data of a partial area of the vehicle wheel (4), and/or
b) **that** the control device (6) is configured to extract the steering position from the image data of the at least one camera, and to determine whether the steering position lies in a predetermined range of steering positions in which a collision of the vehicle door (2) with the vehicle wheel (4) would occur during the opening operation of the vehicle door (2), and if this is the case, to determine that the collision risk is present.

4. Device (1) according to one of the preceding claims, **characterized in that** the control device (6) is configured to determine, on the basis of image data generated by the camera (7, 8, 10), whether there are obstacles, for example objects or persons, in an opening region of the vehicle door (2) and, if this is the case, to determine that the collision risk is present.

5. Device (1) according to one of the preceding claims, **characterized in that** the at least one collision avoidance measure (12) comprises blocking an opening of the vehicle door (2) until the collision risk is no longer present.

6. Device (1) according to one of claims 1 to 4, **characterized in that** the at least one collision avoidance measure (12) comprises enabling only a partial opening of the vehicle door (2), wherein in the partially opened position of the vehicle door (2) no collision of the vehicle door (2) with the vehicle wheel (4) is possible.

7. Device (1) according to one of the preceding claims, **characterized in that** the control device (6) is configured to monitor whether, after determining the presence of a collision risk, a driver of the motor vehicle (3) moves the steerable vehicle wheel (4) via a manual change of a steering wheel position into a steering position for which there is no collision risk and, if this is the case, to terminate the at least one collision avoidance measure (12).

8. Device (1) according to one of the preceding claims, **characterized in that** the at least one collision avoidance measure (12) comprises automatically moving the steerable vehicle wheel (4) by means of an actuator (11) into a steering position for which there is no collision risk.

9. Device (1) according to one of the preceding claims, **characterized in that** the at least one collision avoidance measure (12) comprises emitting at least one warning signal, preferably a visual warning signal and/or an acoustic warning signal.

10. Device (1) according to one of the preceding claims, **characterized in that** the control device (6) is configured to receive steering angle information, preferably steering angle information transmitted via a data bus of the motor vehicle (3), of an electronic braking system, EBS, (15) and/or an electronic stability program, ESP, (16), and to determine, in dependence on the received steering angle information, whether there is a collision risk of the vehicle door (2).

11. Motor vehicle (3), preferably a bus, comprising at least one vehicle door (2), at least one steerable vehicle wheel (4) and a device (1) according to one of the preceding claims.

12. Motor vehicle (3) according to claim 11, **characterized in that** the vehicle door (2) comprises two door wings (13, 14) and **in that** the control device (6) is configured to initiate and/or carry out the at least one collision avoidance measure (12) only for the door wing (13, 14) for which there is a collision risk when the collision risk is present.

13. Motor vehicle (3) according to one of the preceding claims 11 or 12, **characterized in,**
a) **that** the steerable vehicle wheel (4) is part of a steerable rigid axle (17) of the motor vehicle (3); and/or
b) **that** the motor vehicle (3) comprises a steering linkage for transmitting steering forces, a preferably hydraulically assisted steering gear and an electric motor flange-mounted to the steering linkage for assisting the steering force.

14. Motor vehicle (3) according to one of the preceding claims 9 to 13, **characterized in,**
a) **that** the motor vehicle (3) is a bus,
b) **that** the vehicle door (4) comprises two door wings (13, 14); and
c) **that** the at least one camera (7, 8, 10) is a camera (8) of a turning assistance system, a camera of a mirror replacement system of the motor vehicle (3) or a camera (10) integrated in an exterior mirror (9) of the motor vehicle (3), by means of which a near-surrounding area of the motor vehicle (3) can be detected, which at least partially contains the steerable vehicle wheel (4).

## Revendications

1. Dispositif (1) permettant d'éviter une collision entre une porte (2) d'un véhicule automobile (3), de préférence un autobus, et une roue de véhicule (4) orientable du véhicule automobile (3), comprenant :
un dispositif de détection conçu pour détecter indirectement ou directement une position de braquage de la roue de véhicule (4),
un dispositif de commande (6), conçu pour déterminer, en fonction de la position de braquage détectée, s'il existe un risque de collision de la portière (2) du véhicule avec la roue de véhicule (4) lors d'un processus d'ouverture de la portière (2) du véhicule et, s'il existe un risque de collision, pour déclencher et/ou exécuter au moins une mesure d'évitement de collision (12) afin d'éviter la collision de la portière (2) du véhicule avec la roue de véhicule (4),
**caractérisé**
**en ce que** le dispositif de capture comprend au moins une caméra (7, 8, 10) destinée à acquérir la position de braquage, et
**en ce que** l'au moins une caméra (7, 8, 10) est une caméra d'un système de remplacement de rétroviseur du véhicule automobile (3), au moyen duquel une zone proche de l'environnement du véhicule automobile (3) contenant au moins partiellement la roue de véhicule (4) orientable peut être détectée.

2. Dispositif (1) selon la revendication 1, **caractérisé en ce que** l'au moins une caméra (7, 8, 10) est une caméra (8) d'un système d'assistance à l'extinction et/ou une caméra (10) intégrée dans un rétroviseur extérieur (9) du véhicule automobile, au moyen de laquelle il est possible de capturer une zone de l'environnement du véhicule automobile (3) qui contient au moins partiellement la roue de véhicule (4) orientable.

3. Dispositif (1) selon l'une quelconque des revendications 1 ou 2, **caractérisé**
a) **en ce que** l'au moins une caméra est conçue pour générer des données d'image, destinées à acquérir la position de braquage, comprenant au moins des données d'image d'une zone partielle de la roue de véhicule (4), et/ou
b) **en ce que** le dispositif de commande (6) est conçu pour extraire la position de braquage des données d'image de l'au moins une caméra et pour déterminer si la position de braquage se situe dans une plage prédéterminée de positions de braquage dans laquelle une collision de la portière (2) du véhicule avec la roue de véhicule (4) se produirait lors de l'ouverture de la portière (2) du véhicule, et si tel est le cas, pour établir qu'il existe un risque de collision.

4. Dispositif (1) selon l'une quelconque des revendications précédentes, **caractérisé en ce que** le dispositif de commande (6) est conçu pour déterminer, sur la base de données d'image générées par la caméra (7, 8, 10), si des obstacles, par exemple des objets ou des personnes, se trouvent dans une zone d'ouverture de la portière de véhicule (2) et, le cas échéant, pour établir qu'il existe un risque de collision.

5. Dispositif (1) selon l'une quelconque des revendications précédentes, **caractérisé en ce que** l'au moins une mesure d'évitement de collision (12) comprend le blocage d'une ouverture de la portière de véhicule (2) jusqu'à ce qu'il qu'il n'existe plus de risque de collision.

6. Dispositif (1) selon l'une quelconque des revendications 1 à 4, **caractérisé en ce que** l'au moins une mesure d'évitement de collision (12) comprend seulement l'autorisation d'une ouverture partielle de la portière de véhicule (2), aucune collision de la portière de véhicule (2) avec la roue de véhicule (4) n'étant possible dans la position partiellement ouverte de la portière de véhicule (2).

7. Dispositif (1) selon l'une quelconque des revendications précédentes, **caractérisé en ce que** le dispositif de commande (6) est conçu pour surveiller si, après avoir déterminé la présence d'un risque de collision, un conducteur du véhicule automobile (3) amène la roue de véhicule (4) orientable, par une modification manuelle d'une position du volant, dans une position de braquage pour laquelle il n'existe pas de risque de risque de collision et, si tel est le cas, pour mettre fin à l'au moins une mesure d'évitement de collision (12).

8. Dispositif (1) selon l'une quelconque des revendications précédentes, **caractérisé en ce que** l'au moins une mesure d'évitement de collision (12) comprend le fait d'amener automatiquement la roue de véhicule (4) orientable, au moyen d'un actionneur (11), dans une position de braquage pour laquelle il n'existe pas de risque de risque de collision.

9. Dispositif (1) selon l'une quelconque des revendications précédentes, **caractérisé en ce que** l'au moins une mesure d'évitement de collision (12) comprend l'émission d'au moins un message d'avertissement, de préférence un message d'avertissement visuel et/ou un signal d'avertissement acoustique.

10. Dispositif (1) selon l'une quelconque des revendications précédentes, **caractérisé en ce que** le dispositif de commande (6) est conçu pour recevoir des informations d'angle de braquage, de préférence des informations d'angle de braquage transmises par l'intermédiaire d'un bus de données du véhicule automobile (3), en provenance d'un système électronique de freinage, EBS, (15) et/ou d'un programme de stabilité électronique, ESP, (16), et pour déterminer, en fonction des informations d'angle de braquage reçues, s'il existe un risque de collision de la portière de véhicule (2).

11. Véhicule automobile (3), de préférence autobus, comprenant au moins une portière de véhicule (2), au moins une roue de véhicule (4) orientable et un dispositif (1) selon l'une quelconque des revendications précédentes.

12. Véhicule automobile (3) selon la revendication 11, **caractérisé en ce que** la portière de véhicule (2) comporte deux battants (13, 14) et **en ce que** le dispositif de commande (6) est conçu pour déclencher et/ou exécuter l'au moins une mesure d'évitement de collision (12) uniquement pour le battant (13, 14) pour lequel il existe un risque de collision.

13. Véhicule automobile (3) selon l'une quelconque des revendications 11 ou 12 précédentes, **caractérisé**
a) **en ce que** la roue de véhicule (4) orientable fait partie d'un essieu rigide orientable (17) du véhicule automobile (3) ; et/ou
b) **en ce que** le véhicule automobile (3) comprend une timonerie de direction pour la transmission de forces de direction, un boîtier de direction de préférence à assistance hydraulique et un moteur électrique monté sur bride sur la timonerie de direction pour l'assistance de force de braquage.

14. Véhicule automobile (3) selon l'une quelconque des revendications 9 à 13, **caractérisé**
a) **en ce que** le véhicule automobile (3) est un omnibus,
b) **en ce que** la portière de véhicule (4) comporte deux battants (13, 14) ; et
c) **en ce que** la caméra (7, 8, 10) est une caméra (8) d'un système d'assistance à l'extinction, une caméra d'un système de remplacement de rétroviseur du véhicule automobile (3) ou une caméra (10) intégrée dans un rétroviseur extérieur (9) du véhicule automobile (3), au moyen de laquelle il est possible de détecter une zone environnante du véhicule automobile (3) qui contient au moins partiellement la roue de véhicule (4) orientable.
